# FASCICULE DE BREVET EUROPEEN

(11) **EP 2 035 521 B1**
(45) Date de publication et mention de la délivrance du brevet: **03.12.2014**
(21) Numéro de dépôt: 07765617.1
(22) Date de dépôt: 26.06.2007
(51) Int. Cl.: C09J 151/00, C09J 151/06, C08L 51/00, C08L 51/06, B32B 27/28, C08F 259/08, C08F 255/02

(54) **COMPOSITIONS POLYMERIQUES A PROPRIETES ADHESIVES**
POLYMERZUSAMMENSETZUNGEN MIT HAFTEIGENSCHAFTEN
POLYMERIC COMPOSITIONS WITH ADHESIVE PROPERTIES

(30) Priorité: 26.06.2006 FR 0605715; 27.06.2006 FR 0605801; 10.11.2006 FR 0609870
(43) Date de publication de la demande: 18.03.2009
(73) Titulaire: SOLVAY SA, 1120 Bruxelles (BE)
(72) Inventeur: WAUTIER, Henri, B-7090 Braine-le-Comte (BE); GAUTHY, Fernand, B-1780 Wemmel (BE)
(74) Mandataire: Vande Gucht, Anne
(86) Numéro de dépôt international: PCT/EP2007/056343
(87) Numéro de publication internationale: WO 2008/000730

(56) Documents cités:
- EP-A- 0 032 021
- WO-A-2006/045637
- CH-A5- 654 318
- US-A- 6 113 882
- US-A1- 5 882 753
- US-A1- 5 965 275
- US-A1- 6 124 403
- US-A1- 2004 242 778
- US-B2- 6 683 128

## Description

La présente invention concerne des compositions polymériques à propriétés adhésives. Elle concerne aussi certains composants particuliers de ces compositions. Elle concerne encore une méthode pour la préparation de ces compositions. L'invention concerne également les structures multicouches dont une des couches est constituée de la composition polymérique à propriétés adhésives.

Il est connu que les polyoléfines, notamment les polymères de l'éthylène et du propylène, sont utilisées pour la fabrication de tuyaux, de réservoirs, de conteneurs et de récipients pour le transport et le stockage d'hydrocarbures liquides, en particulier d'huiles et de carburants. La résistance chimique et l'imperméabilité de ces polymères vis-à-vis de ces hydrocarbures ne sont toutefois pas toujours suffisantes pour tous les usages auxquels on les destine. Pour pallier cet inconvénient, on interpose alors une couche barrière d'un autre polymère entre l'hydrocarbure à véhiculer ou à stocker et la polyoléfine. Des polymères, à la fois chimiquement résistants et imperméables, fréquemment utilisés à cette fin, sont les polymères fluorés, en particulier les polymères et copolymères des fluorures de vinyle et de vinylidène.

Ces polymères fluorés présentent à leur tour un autre inconvénient : ils n'adhèrent pas bien aux polyoléfines. On a dès lors développé des compositions en vue d'améliorer les propriétés adhérentes des polymères fluorés.

Ainsi, le document EP-A-0650987, dont le contenu est incorporé par référence dans la présente description, décrit des polymères à propriétés adhésives dont les chaînes hydrocarbonées principales, contenant du fluor, sont greffées de composés comprenant des groupements fonctionnels, réactifs ou polaires, présentant des propriétés adhésives. Ces groupements fonctionnels peuvent être des groupes carboxyles, des résidus d'anhydrides carboxyliques, des groupes époxy, des groupes hydroxyles, des groupes isocyanates, des groupes esters, des groupes amides, des groupes amino et des groupes hydrolysables contenant un radical silyle ou cyano. Ces polymères n'adhèrent toutefois pas suffisamment bien aux polyoléfines.

Le document EP-B-206689 concerne un laminé comprenant au moins deux couches d'adhésif distinctes en contact constituées d'un polymère d'hydrocarbure fluoré modifié par un groupe carboxyle, anhydride d'acide, hydroxyle ou époxyde et d'un polymère d'alpha-oléfine modifié par un groupe carboxyle, anhydride d'acide, hydroxyle ou époxyde différent du précédent. Ces deux couches d'adhésif distinctes peuvent être placées sur une couche de substrat préparé à partir d'un matériau choisi parmi divers polymères dont le fluorure de polyvinylidène, le polyéthylène et le nylon. Ainsi est cité un laminé à quatre couches comprenant une couche de poly(fluorure de vinylidène) liée à une couche de polyéthylène par l'intermédiaire de deux couches d'adhésifs distinctes. Cette structure multicouche présente notamment l'inconvénient d'être constituée de deux couches d'adhésif et donc au total de quatre couches, ce qui pose des problèmes techniques lors de la coextrusion au niveau industriel, plus facilement envisageable techniquement si elle est limitée à trois couches, donc avec une seule couche d'adhésif.

Le problème réside donc dans la fourniture d'un adhésif qui peut se lier de manière satisfaisante à une couche de polymère thermoplastique d'hydrocarbure fluoré d'un côté et à une couche de polymère thermoplastique non compatible de l'autre côté en vue de former des structures à couches polymériques multiples ne contenant qu'une seule couche d'adhésif.

La présente invention vise à fournir une composition, permettant de faire adhérer fortement, sous la forme d'une seule couche adhésive, un polymère thermoplastique d'hydrocarbure fluoré et un polymère thermoplastique non compatible.

La présente invention concerne donc à titre principal des compositions polymériques à propriétés adhésives comprenant :
(1) au moins un polymère fluoré (A) greffé d'au moins un composé (a), lequel composé (a) contient au moins un groupement fonctionnel (f1) capable de conférer des propriétés d'adhérence au dit polymère fluoré ;
(2) au moins un polymère oléfinique (B) greffé d'au moins un composé (b), lequel composé (b) contient au moins un groupement fonctionnel (f2) capable de conférer des propriétés d'adhérence au dit polymère oléfinique et de réagir avec le groupement fonctionnel (f1) contenu dans le composé (a) ;
(3) au moins un polymère (C) choisi parmi les polyesters et les polyamides.

Par le fait qu'un polymère est greffé d'un certain composé, on entend habituellement signifier que l'on a fixé chimiquement, à différents endroits le long des chaînes de ce polymère, une ou plusieurs molécules de ce composé.

Dans un mode particulier de réalisation de la présente invention [mode (I)], auquel on donne habituellement la préférence, une partie de la quantité de groupement fonctionnel (f2) du composé (b) greffé sur le polymère (B) a réagi avec une partie de la quantité de groupement fonctionnel (f1) du composé (a) greffé sur le polymère (A), liant ainsi chimiquement du polymère (B) à du polymère (A). Selon ce mode, il est préféré qu'une partie de la quantité de groupement fonctionnel (f1) du composé (a) et une partie de la quantité de groupement fonctionnel (f2) du composé (b) restent à l'état non réagi, et de ce fait capables de conférer des propriétés d'adhérence respectivement au polymère (A) et au polymère (B). Enfin, toujours selon ce mode particulier, une partie de la quantité de groupement fonctionnel (f1) du composé (a) greffé sur le polymère (A) et/ou une partie de la quantité de groupement fonctionnel (f2) du composé (b) greffé sur le polymère (B) peuvent éventuellement en outre avoir réagi avec le polymère (C).

Dans un autre mode de réalisation de la présente invention [mode (II)], la totalité de la quantité de groupement fonctionnel (f1) du composé (a) greffé sur le polymère (A) et la totalité de la quantité de groupement fonctionnel (f2) du composé (b) greffé sur le polymère (B) sont à l'état non réagi. Les compositions polymériques selon ce dernier mode de réalisation de la présente invention servent avantageusement de compositions précurseurs à la préparation des compositions selon le mode (I) tel que détaillé ci-avant.

Les compositions polymériques selon l'invention comprennent au moins un polymère fluoré (A). Par polymère fluoré, on entend désigner un polymère dont plus de 50 % en poids des unités monomériques sont dérivées d'au moins un monomère fluoré. Le polymère fluoré peut être un homopolymère ; il peut être aussi un copolymère formé par plusieurs monomères fluorés entre eux, ou encore un copolymère formé par un ou plusieurs monomères fluorés avec un ou plusieurs monomères non fluorés. Ces copolymères peuvent être notamment être des copolymères statistiques, des copolymères à blocs ou des copolymères greffés.

Par monomère fluoré, on entend désigner tout monomère qui comprend au moins un atome de fluor ; il comprend habituellement au moins une insaturation éthylénique. A titre d'exemples de monomères fluorés, on peut citer les monomères vinyliques fluorés, les monomères styréniques fluorés comme le 4-fluorostyrène, les monomères (méth)acryliques fluorés comme l'acrylate de trifluoroéthyle et les diènes conjugués fluorés comme le 2-fluorobutadiène. Le monomère fluoré est de préférence un monomère vinylique fluoré. Par monomère vinylique fluoré, on entend désigner les monomères fluorés monoéthyléniquement insaturés qui sont aliphatiques et qui ont pour seul(s) hétéroatome(s) un ou plusieurs atomes de fluor et, éventuellement en outre, un ou plusieurs atomes de chlore. A titre d'exemples de monomères vinyliques fluorés, on peut citer les monomères vinyliques exempts d'atome d'hydrogène tels que le tétrafluoroéthylène, l'hexafluoropropylène et le chlorotrifluoroéthylène, et les monomères vinyliques fluorés partiellement hydrogénés comme le fluorure de vinyle, le trifluoroéthylène, le 3,3,3-trifluoropropène et, avec une mention toute particulière, le fluorure de vinylidène.

Par monomère non fluoré, on entend désigner tout monomère exempt d'atome de fluor ; il comprend habituellement au moins une insaturation éthylénique. Des exemples de monomères non fluorés sont : les alpha-monooléfines, telles que par exemple l'éthylène et le propylène ; le styrène et les dérivés styréniques non fluorés ; les monomères chlorés non fluorés tels que par exemple le chlorure de vinyle et le chlorure de vinylidène ; les éthers vinyliques non fluorés ; les esters vinyliques non fluorés tels que par exemple l'acétate de vinyle ; les esters, nitriles et amides (méth)acryliques tels que l'acrylonitrile et l'acrylamide.

A titre d'exemples de polymères fluorés, on peut citer notamment les homopolymères du fluorure de vinylidène, du fluorure de vinyle, du trifluoréthylène ou du chlorotrifluoréthylène, et les copolymères que forment ces monomères fluorés entre eux ou avec au moins un autre monomère fluoré tel que défini ci-dessus (y compris un monomère fluoré ne contenant pas d'atome d'hydrogène, tel que le tétrafluoroéthylène ou l'hexafluoropropylène). A titre d'exemples de tels co- et terpolymères, on peut citer les co- et terpolymères du fluorure de vinylidène et les co- et terpolymères du chlorotrifluoroéthylène avec au moins un autre monomère fluoré tel que défini ci-dessus (y compris un monomère fluoré ne contenant pas d'atome d'hydrogène, tel que le tétrafluoroéthylène ou l'hexafluoropropylène). On peut citer aussi les copolymères et terpolymères d'au moins un des monomères fluorés mentionnés ci-dessus avec au moins un monomère non fluoré.

Le polymère fluoré (A) présent dans les compositions selon l'invention est choisi de préférence parmi les polymères du fluorure de vinylidène.

Aux fins de la présente invention, un polymère du fluorure de vinylidène est un polymère fluoré (c.-à-d, un polymère dont plus de 50 % en poids des unités monomériques sont dérivées d'au moins un monomère fluoré), comprenant des unités monomériques dérivées du fluorure de vinylidène.

A titre d'exemples de polymères du fluorure de vinylidène, on peut citer notamment les homopolymères du fluorure de vinylidène, et ses copolymères avec d'autres monomères à insaturation éthylénique, qu'ils soient fluorés (des exemples d'autres monomères fluorés à insaturation éthylénique sont le fluorure de vinyle, le trifluoréthylène, le tétrafluoréthylène, le chlorotrifluoréthylène et l'hexafluoropropylène) ou non (des exemples de monomères non fluorés à insaturation éthylénique sont les alpha-monooléfines telles que l'éthylène et le propylène ; le styrène et les dérivés styréniques non fluorés ; les monomères chlorés non fluorés tels que le chlorure de vinyle et le chlorure de vinylidène ; les éthers vinyliques non fluorés ; les esters vinyliques non fluorés tels que l'acétate de vinyle ; les esters, nitriles et amides (méth)acryliques non fluorés tels que l'acrylamide et l'acrylonitrile).

Les polymères du fluorure de vinylidène contiennent de préférence plus de 50 % en poids d'unités monomériques dérivées du fluorure de vinylidène.

Des polymères du fluorure de vinylidène particulièrement préférés sont les homopolymères du fluorure de vinylidène et les copolymères statistiques du fluorure de vinylidène contenant 10 à 20 % en poids d'un comonomère fluoré choisi parmi l'hexafluoropropylène et le chlorotrifluoroéthylène.

Selon l'invention, le polymère fluoré (A) est fonctionnalisé par greffage avec au moins un composé (a) - défini et décrit en détails plus loin - qui contient au moins un groupement fonctionnel (f1) capable de conférer des propriétés d'adhérence audit polymère fluoré.

Le groupement fonctionnel (f1) peut être n'importe quel groupement présentant une réactivité ou une polarité telle qu'elle permet au polymère fluoré de développer des forces d'adhésion, même vis-à-vis de matériaux qu'il n'est normalement pas possible de faire adhérer à ce polymère. Le groupement (f1) est généralement choisi parmi les groupements portant au moins une fonction réactive n'intervenant pas dans des mécanismes radicalaires. Il est choisi parmi:
(f1.5) les groupements époxy, dérivés de composés contenant une fonction éther cyclique ;
(f1.6)les groupements hydroxylés dérivés d'alcools, dénommés aussi plus simplement ci-après « groupements alcools » ; les alcools dont ces groupements sont originaires peuvent être des monoalcools ou des polyols ;
(f1.7) les groupements carbonyles ;
On préfère plus particulièrement les groupements époxy et les groupements alcools dérivés de diols. Les groupements alcools dérivés de diols donnent les meilleurs résultats.

Comme mentionné, la fonctionnalisation du polymère fluoré (A) s'effectue par le greffage, sur ce polymère, d'au moins un composé (a) contenant au moins un groupement fonctionnel (f1). Selon l'invention, le ou les groupements fonctionnels (f1) portés par le ou les composés (a) peuvent appartenir à la même famille ou à des familles différentes. Ainsi, il n'est nullement exclu d'utiliser à la fois un composé (a) contenant un groupement époxy et un autre composé (a) contenant un ou plusieurs groupements alcools ; de même, il n'est nullement exclu d'utiliser un composé (a) contenant à la fois un groupement ester et un autre groupement, époxy ou alcool par exemple.

Pour pouvoir être greffé sur le polymère fluoré (A), le composé (a) doit aussi contenir au moins un groupement (g) rendant possible le greffage dudit composé (a) sur ce polymère. Ce groupement (g) est généralement choisi parmi :
- les groupements hydrocarbonés saturés ou insaturés, capables de participer à des mécanismes radicalaires, tels que des additions ou des associations de radicaux ;
- les groupes amino ou phénols capables de participer à des réactions à caractère nucléophile ;
- les groupes capables de former facilement des radicaux libres tels que les groupes peroxy et azo.

De préférence, le groupement (g) est choisi parmi les groupements organiques présentant au moins une liaison carbone-carbone éthyléniquement insaturée, parmi les groupes amino et parmi les groupes peroxy. Les groupes organiques présentant au moins une liaison carbone-carbone terminale (α,β) éthyléniquement insaturée, tels que les groupes vinyle, allyle, acryloyloxyalkyle et méthacryloyloxyalkyle par exemple, sont particulièrement préférés à titre de groupement (g). Les groupes allyle donnent les meilleurs résultats.

Des exemples de composés (a) contenant au moins un groupe organique présentant au moins une liaison carbone-carbone terminale (α,β) éthyléniquement insaturée à titre de groupements (g) et au moins un groupement acide ou anhydride à titre de groupement (f1) sont les acides mono- ou dicarboxyliques insaturés tels que l'acide acrylique, l'acide méthacrylique, l'acide maléique, l'acide fumarique, l'acide itaconique, l'acide crotonique, l'acide citraconique, l'acide bicyclo-[2.2.1]hept-2-ène-5,6 dicarboxylique, l'anhydride maléique, l'anhydride itaconique, l'anhydride crotonique et l'anhydride citraconique. L'anhydride maléique est généralement préféré, notamment pour des raisons d'accessibilité.

Des exemples de composés (a) contenant au moins un groupe organique présentant au moins une liaison carbone-carbone terminale (α,β) éthyléniquement insaturée à titre de groupement (g) et au moins un groupement ester à titre de groupement (f1) sont l'acétate de vinyle, le propionate de vinyle, le maléate de monométhyle, le maléate de diméthyle, l'acrylate de méthyle, l'acrylate d'éthyle, l'acrylate de n-propyle, l'acrylate de n-butyle, l'acrylate d'isobutyle, l'acrylate d'amyle, l'acrylate d'hexyle, l'acrylate de 2-éthylhexyle, le méthacrylate de méthyle, le méthacrylate d'éthyle le méthacrylate de n-propyle, le méthacrylate de n-butyle, le méthacrylate d'amyle, le méthacrylate d'hexyle, le méthacrylate de 2-éthylhexyle, le fumarate de diéthyle, l'itaconate de diméthyle et le citraconate de diéthyle.

Des exemples de composés (a) contenant au moins un groupe organique présentant au moins une liaison carbone-carbone terminale (α,β) éthyléniquement insaturée à titre de groupement (g) et au moins un groupement amide à titre de groupement (f1) sont l'acrylamide et la méthacrylamide.

Un exemple de composé (a) contenant au moins un groupe organique présentant au moins une liaison carbone-carbone terminale (α,β) éthyléniquement insaturée à titre de groupement (g) et au moins un groupement époxy à titre de groupement (f1) est l'éther allyl glycidylique.

Des exemples de composés (a) contenant au moins un groupe organique présentant au moins une liaison carbone-carbone terminale (α,β) éthyléniquement insaturée à titre de groupement (g) et au moins un groupement alcool à titre de groupement (f1) sont l'alcool allylique et le 3-allyloxy-1,2-propanediol.

Des exemples de composés (a) contenant au moins un groupe organique présentant au moins une liaison carbone-carbone terminale (α,β) éthyléniquement insaturée à titre de groupement (g) et au moins un groupement carbonyle à titre de groupement (f1) sont les composés hétérocycliques organiques contenant un groupe vinyle ou allyle attaché à l'hétéroatome et dont l'hétérocycle porte la liaison carbonyle, tels que la N-vinylpyrrolidone et la N-vinylcaprolactame.

Des exemples de composés (a) contenant au moins un groupe organique présentant au moins une liaison carbone-carbone terminale (α,β) éthyléniquement insaturée à titre de groupement (g) et au moins un groupement hydrolysable contenant un groupe silyle à titre de groupement (f1) sont le vinyl triméthoxysilane, le vinyl triéthoxysilane, le vinyl triacétoxysilane, le vinyl tris(β-méthoxyéthoxy)silane et le γ-méthacryloxypropyltriméthoxysilane.

Des exemples de composés (a) contenant au moins un groupe organique présentant au moins une liaison carbone-carbone terminale (α,β) éthyléniquement insaturée à titre de groupement (g), et au moins deux groupements fonctionnels (f1) de nature différente, sont : l'acrylate et le méthacrylate de glycidyle (un groupement ester et un groupement époxy à titre de groupements (f1)) ; l'acrylate et le méthacrylate d'hydroxyéthyle et l'acrylate et le méthacrylate d'hydroxypropyle (un groupement ester et un groupement alcool à titre de groupements (f1)) ; la N-méthylolméthacrylamide (un groupement alcool et un groupement amide à titre de groupements (f1)).

Parmi tous les composés (a), on préfère les composés contenant au moins un groupement fonctionnel (f1) choisis parmi les groupements époxy, les groupements alcools et les groupements carbonyles, plus particulièrement parmi les groupements alcools dérivés de diols. L'éther allyl glycidylique, le 3-allyloxy-1,2-propanediol, la N-vinylpyrrolidone et la N-vinylcaprolactame donnent de bons résultats. Les meilleurs résultats ont été obtenus avec le 3-allyloxy-1,2-propanediol.

Le greffage du composé (a) sur le polymère fluoré (A) peut être effectué selon n'importe quelle méthode connue à cet effet. Selon les propriétés chimiques et l'état physique du composé (a), ce greffage peut être effectué à l'état solide, en solution, en suspension, en milieu aqueux ou au sein d'un solvant organique. Ce greffage peut aussi être effectué par irradiation, par exemple au moyen d'un faisceau d'électrons ou par rayonnement gamma.

Le greffage du composé (a) sur le polymère fluoré (A) est le plus généralement effectué sur un mélange fondu du composé et du polymère. On peut opérer en discontinu, dans des malaxeurs, ou en continu, dans des extrudeuses.

La réaction de greffage du composé (a) sur le polymère fluoré (A) est le plus souvent favorisée et initiée par un générateur de radicaux, au moins quand le groupement (g) du composé (a) n'est pas lui-même un groupe capable de former facilement des radicaux libres, comme les groupes peroxy et azo. A titre de générateur de radicaux, on utilise généralement des composés dont la température de décomposition est comprise entre 120 et 350°C et la durée de demi-vie, dans cette zone de température, de l'ordre d'une minute. Le générateur de radicaux est de préférence un peroxyde organique, et plus particulièrement un alkyl- ou un arylperoxyde. Parmi ceux-ci, on peut citer le peroxyde de benzoyle, le peroxyde de dichlorobenzoyle , le peroxyde de dicumyle, le peroxyde de di(t-butyle), le peroxyde de t-butylcumyle, le 1,3-di(2-t-butylperoxy- isopropyl)benzène, le 2,5-diméthyl-2,5-di (t-butylperoxy)hexane et le 2,5-diméthyl-2,5-di(t-butylperoxy)-3-hexyne. Le 2,5-diméthyl-2,5-di-(t-butylperoxy)hexane et le peroxyde de dicumyle sont particulièrement préférés.

Lorsqu'on opère le greffage du composé (a) sur le polymère fluoré (A) en continu en extrudeuse, le générateur de radicaux et le composé (a) peuvent être introduits de quelque manière que ce soit pour autant qu'ils soient introduits de manière continue dans le temps et qu'ils soient bien dispersés dans la matière en fusion. Le générateur de radicaux et le composé (a) peuvent être introduits par pulvérisation par exemple au moyen d'un injecteur de type spray ou d'un vaporisateur ou par injection dans la masse fondue. L'introduction du générateur de radicaux et du composé (a) via un masterbatch avec le polymère fluoré (A) en poudre ou via un masterbatch avec une charge peut également être envisagée.

Selon un mode de réalisation particulièrement préféré, le composé (a) est introduit avant le générateur de radicaux.

Par réaction en masse fondue, on entend désigner aux fins de la présente invention, toute réaction en l'absence substantielle de solvant ou de diluant et à une température au moins égale à la température de fusion du polymère fluoré (A).

Par extrudeuse, on entend désigner tout dispositif continu comprenant au moins une zone d'alimentation et, à sa sortie, une zone d'évacuation précédée d'une zone de compression, cette dernière forçant la masse fondue à passer au travers de la zone d'évacuation. La zone d'évacuation peut en outre être suivie d'un dispositif de granulation ou d'un dispositif donnant à la matière extrudée sa forme finale. Avantageusement, il est fait appel à des extrudeuses connues basées sur le travail d'une vis ou de deux vis, qui, dans ce dernier cas, peuvent coopérer en mode co- ou contra-rotatif (même sens de rotation ou sens de rotation opposés).

De préférence, l'extrudeuse utilisée selon la présente invention est aménagée de manière à ce qu'elle comprenne successivement une zone d'alimentation, une zone de fusion de la matière, une zone d'homogénéisation, une zone de réaction, facultativement une zone d'introduction d'additifs et une zone de compression-évacuation précédée d'une zone de dégazage. Chacune de ces zones a une fonction bien spécifique et se trouve à une température bien spécifique.

La zone d'alimentation a pour fonction d'assurer l'alimentation du polymère fluoré (A). Elle se trouve habituellement à une température inférieure ou égale à 50°C.

La zone de fusion de la matière a pour fonction d'assurer la mise en fusion de la matière.

La zone d'homogénéisation a pour fonction d'homogénéiser la matière en fusion.

La zone de réaction a pour fonction d'assurer la réaction.

La température dans la zone de fusion et dans la zone d'homogénéisation de la matière est habituellement supérieure ou égale à la température de fusion du polymère fluoré (A).

La température dans la zone de réaction est habituellement supérieure ou égale à la température à laquelle le temps de demi-vie du générateur de radicaux est inférieur au temps de séjour de la matière dans cette zone.

La zone d'introduction d'additifs a pour fonction d'assurer l'introduction d'additifs lorsque ceux-ci sont ajoutés dans l'extrudeuse. La température de cette zone est généralement fonction de la viscosité de la matière et de la nature des additifs ajoutés.

La zone de compression-évacuation a pour fonction de compresser la matière et d'assurer l'évacuation de celle-ci. La température dans la zone de compression-évacuation est généralement fonction de la viscosité de la matière à évacuer.

Le composé (a) est de préférence introduit dans l'extrudeuse avant la zone d'homogénéisation.

Le générateur de radicaux est de préférence introduit dans la zone de réaction de l'extrudeuse.

Quelle que soit la méthode de greffage retenue, la quantité de composé (a) greffé sur le polymère (A), exprimée en quantité de composé (a), est avantageusement supérieure à 0,01 % en poids rapporté au poids de polymère (A), de préférence à 0,05 % en poids ou, mieux encore, à 0,1 % en poids. En outre, cette quantité est avantageusement inférieure ou égale à 5,0 % en poids, préférentiellement à 3,0 % et mieux encore, à 2,0 % en poids. Le dosage est habituellement réalisé par voie chimique (titrage).

Des propriétés adhésives tout à fait remarquables et une stabilité thermique exceptionnellement élevées ont été observées lorsque le polymère (A) entrant dans les compositions polymériques selon l'invention, était un polymère fluoré greffé d'au moins un composé (a) contenant, à titre de groupement (g), au moins un groupe organique présentant au moins une liaison carbone-carbone éthyléniquement insaturée et, à titre de groupements (f1), au moins deux groupements alcools. Selon la demanderesse, pareils polymères fluorés greffés sont des produits nouveaux qui, à ce titre, constituent un autre objet de la présente invention ; ils sont dénommés ci-après « polymères fluorés greffés selon la présente invention ».

Les polymères fluorés greffés selon la présente invention sont de préférence des polymères du fluorure de vinylidène. De manière particulièrement préférée, ils contiennent plus de 50 % en poids d'unités monomériques dérivées du fluorure de vinylidène. De manière tout particulièrement préférée, ils sont choisis parmi les homopolymères du fluorure de vinylidène et les copolymères statistiques du fluorure de vinylidène contenant 10 à 20 % en poids d'un comonomère fluoré choisi parmi l'hexafluoropropylène et le chlorotrifluoroéthylène.

Le groupement (g) du composé (a) des polymères fluorés greffés selon la présente invention est de préférence un groupe organique contenant au moins une liaison carbone-carbone terminale (α,β) éthyléniquement insaturée. De manière particulièrement préférée, il est choisi parmi les groupes vinyle, allyle, acryloyloxyalkyle et méthacryloyloxyalkyle. De manière tout particulièrement préférée, il est un groupe allyle.

Le composé (a) des polymères fluorés greffés selon la présente invention contient de préférence au plus quatre groupements alcools. De manière particulièrement préférée, il en contient au plus trois. De manière tout particulièrement préférée, il en contient deux et rien que deux.

Le composé (a) des polymères fluorés greffés selon la présente invention est de préférence choisi parmi les composés aliphatiques et cycloaliphatiques. De manière particulièrement préférée, il est choisi parmi les composés aliphatiques.

Le composé (a) des polymères fluorés greffés selon la présente invention contient de préférence au plus trois liaisons carbone-carbone éthyléniquement insaturées. De manière particulièrement préférée, il en contient au plus deux. De manière tout particulièrement préférée, il en contient une et une seule.

De bons résultats ont été obtenus lorsque le composé (a) des polymères fluorés greffés selon la présente invention était un alcènediol, en particulier lorsque les polymères fluorés greffés en question étaient choisis parmi les homopolymères du fluorure de vinylidène et les copolymères statistiques du fluorure de vinylidène contenant 10 à 20 % en poids d'un comonomère fluoré choisi parmi l'hexafluoropropylène et le chlorotrifluoroéthylène.

D'excellents résultats ont été obtenus lorsque le composé (a) des polymères fluorés selon la présente invention était le 3-allyloxy-1,2-propanediol, en particulier lorsque les polymères fluorés greffés en question étaient choisis parmi les homopolymères du fluorure de vinylidène et les copolymères statistiques du fluorure de vinylidène contenant 10 à 20 % en poids d'un comonomère fluoré choisi parmi l'hexafluoropropylène et le chlorotrifluoroéthylène.

Les compositions polymériques selon l'invention comprennent au moins un polymère oléfinique (B). Aux fins de la présente invention, on entend désigner par le terme « polymère oléfinique », un polymère dont plus de 50 % en poids des unités monomériques sont dérivées d'au moins une oléfine linéaire.

De préférence plus de 60 % en poids, et de manière particulièrement préférée plus de 80 % en poids, des unités monomériques du polymère oléfinique (B) sont dérivées d'au moins une oléfine linéaire.

A titre d'exemples d'oléfines linéaires, on peut citer les alpha-monooléfines linéaires contenant de 2 à 20, de préférence de 2 à 12, atomes de carbone, telles que l'éthylène, le propylène, le 1-butène, le 1-pentène, le 1-hexène, le 1-heptène, le 1-octène, le 1-nonène, le 1-décène, le 1-undécène et le 1-dodécène. Des alpha-monooléfines linéaires préférées sont l'éthylène et le propylène.

Le polymère oléfinique (B) peut être sélectionné notamment parmi les homopolymères des oléfines précitées et, de préférence, parmi les copolymères de ces oléfines, en particulier les copolymères de l'éthylène et du propylène, entre eux ou avec un ou plusieurs comonomères. Le polymère oléfinique (B) peut aussi être sélectionné parmi les mélanges des homopolymères des oléfines précitées entre eux, parmi les mélanges des copolymères de ces oléfines entre eux et parmi les mélanges desdits homopolymères avec lesdits copolymères.

Les comonomères peuvent être choisis notamment :
- parmi les alpha-monooléfines linéaires décrites ci-dessus ;
- parmi les alpha-monooléfines branchées contenant de 4 à 12 atomes de carbone comme le 3-méthylbutène, le 4-méthylpentène, le 5-méthylhexène ;
- parmi les monomères aryl vinyliques comme le styrène, l'alpha-méthylstyrène, l'ortho-méthoxystyrène ;
- parmi les esters vinyliques comme l'acétate de vinyle ;
- parmi les monomères vinyliques et vinylidéniques halogénés comme le chlorure de vinyle, le chlorure de vinylidène ;
- parmi les vinyl alkyl éthers comme le vinyl méthyl éther, le vinyl isobutyl éther ;
- parmi les monomères acryliques comme les acides acrylique et méthacrylique, l'acrylate de méthyle, la N,N-diméthylacrylamide, l'acrylonitrile ;
- parmi les diènes conjugués comme le butadiène, l'isoprène, le 1,3-pentadiène ;
- parmi les diènes non conjugués comme le 1,4-pentadiène, le 7-méthyl-1,6-octadiène, le 5-éthylidène-2-norbornène, le bicyclo [2.2.1]oct-2,5-diène.

La teneur pondérale en unités formées à partir des comonomères dans le polymère oléfinique (B) est avantageusement inférieure à 40 % en poids et de préférence inférieure à 20 % en poids.

Comme il a été précisé plus haut, par le terme « polymère oléfinique (B) », on entend signifier aussi bien les homo- et copolymères décrits ci-avant, pris isolément, que les mélanges (i) de ces homopolymères entre eux, les mélanges (ii) des copolymères de ces oléfines entre eux et les mélanges (iii) desdits homopolymères avec lesdits copolymères.

Il peut être avantageux, pour les propriétés adhésives des compositions selon l'invention, que le polymère oléfinique (B) soit un élastomère oléfinique, c.-à-d, qu'il soit une polyoléfine présentant des caractéristiques élastomériques. Un élastomère oléfinique vérifie généralement différentes propriétés physiques définies dans la norme ASTM D 1566.

De préférence, le polymère oléfinique (B) présente une température de transition vitreuse inférieure à - 40°C.

Il présente habituellement en outre une ou plusieurs autres caractéristiques suivantes, ainsi que reprises du document US-A-5001205, dont le contenu est ici incorporé par référence :
- une viscosité Mooney (norme ASTM D 1646) de préférence non inférieure à 10;
- un poids moléculaire moyen en poids (M_{w}) de préférence non inférieur à une certaine valeur, 10000 dans le cas qui nous occupe ;
- un degré de cristallinité ne dépassant de préférence pas 25 %.

Lorsque le polymère oléfinique (B) est un copolymère, il est de préférence choisi parmi les copolymères d'au moins une première alpha-monooléfine linéaire choisie parmi l'éthylène et le propylène, et d'au moins une seconde alpha-monooléfine différente de la première, choisie parmi les alpha-monooléfines linéaires contenant de 2 à 12 atomes de carbone, comme l'éthylène, le propylène, le 1-butène, le 1-pentène, le 1-hexène, le 1-heptène, le 1-octène et parmi les alpha-monooléfines branchées contenant de 4 à 12 atomes de carbone, comme le 3-méthylbutène, le 4-méthylpentène, le 5-méthylhexène. La seconde alpha-monooléfine est choisie de préférence parmi l'éthylène, le propylène et l'octène. A titre optionnel, ces copolymères peuvent également contenir au moins un diène conjugué comme le butadiène, l'isoprène, le 1,3-pentadiène ou au moins un diène non conjugué comme le 1,4-pentadiène, le 7-méthyl-1,6-octadiène, le 5-éthylidène-2-norbornène, le bicyclo [2.2.1]oct-2,5-diène.

Les proportions respectives de première et de seconde alpha-monooléfines présentes dans le polymère oléfinique (B) peuvent varier dans de larges mesures. Elles sont de préférence choisies de manière à ce que le polymère oléfinique (B) présente des caractéristiques élastomériques. Ainsi, le polymère oléfinique (B) comprend en général au moins 40 % en poids, de préférence au moins 75 % en poids de la première alpha-monooléfine, et au moins 5 % en poids, de préférence au moins 10 % en poids de la seconde alpha-monooléfine, par rapport au poids total du polymère oléfinique (B). La quantité de première alpha-monooléfine présente dans le polymère oléfinique (B) n'est généralement pas supérieure à 95 % en poids, de préférence pas supérieure à 85 % en poids et la quantité de seconde alpha-monooléfine présente dans le polymère oléfinique (B) n'est généralement pas supérieure à 40 %, de préférence pas supérieure à 20 % en poids, par rapport au poids total du polymère oléfinique (B). Lorsque le polymère oléfinique (B) contient un diène conjugué ou non conjugué, ce diène est présent à raison d'au moins 0,5 %, de préférence d'au moins 5 % en poids, par rapport au poids total du polymère oléfinique (B). La quantité de diène conjugué ou non conjugué présent dans le polymère oléfinique (B) n'est généralement pas supérieure à 25, de préférence pas supérieure à 15 % en poids, par rapport au poids total du polymère oléfinique (B).

Des élastomères oléfiniques particulièrement préférés pour être incorporés, à titre de polymère oléfinique (B), dans les compositions selon l'invention - en particulier lorsque ces dernières sont destinées à la réalisation de structures multicouches dont l'une des couches à faire adhérer est une couche de polymère thermoplastique riche en unités monomériques dérivées du propylène - sont les élastomères oléfiniques contenant de 70 à 95, de préférence de 75 à 90 % en poids de propylène, et de 5 à 30, de préférence de 10 à 25 % en poids d'éthylène. Des élastomères oléfiniques correspondant de manière générale à cette composition peuvent être avantageusement préparés en présence de systèmes catalytiques contenant des complexes à base de métallocènes, par exemple selon les procédés décrits dans les documents US-B-654088 et US-A-5001205, dont le contenu est incorporé par référence dans la présente description.

En corollaire, lorsque les compositions selon l'invention sont destinées à la réalisation de structures multicouches dont l'une des couches à faire adhérer est une couche de polymère thermoplastique riche en unités monomériques dérivées de l'éthylène, des élastomères oléfiniques particulièrement préférés pour être incorporés, à titre de polymère oléfinique (B), dans les compositions selon l'invention, sont les élastomères oléfiniques contenant de 70 à 95 %, de préférence de 75 à 90 % en poids d'éthylène, et de 5 à 30 %, de préférence de 10 à 25 % en poids d'un monomère choisi parmi le propylène et l'octène. Ces derniers peuvent aussi être avantageusement préparés en présence des systèmes catalytiques mentionnés ci-dessus.

Selon une variante avantageuse de réalisation des compositions polymériques selon l'invention, le polymère oléfinique (B) peut être constitué d'un mélange d'un élastomère oléfinique tel que défini ci-dessus avec un polymère oléfinique, non élastomérique, semi-cristallin, choisi parmi les homopolymères des oléfines précitées et parmi les copolymères de ces oléfines. A titre d'homopolymères et copolymères des oléfines précitées pour la réalisation de cette variante, on peut citer :
- les homopolymères de l'éthylène ;
- les homopolymères du propylène ;
- les copolymères de l'éthylène et d'une seconde alpha-monooléfine linéaire contenant de 3 à 8 atomes de carbone, comme le propylène, le 1-butène, et le 1-octène ;
- les copolymères du propylène et d'une autre alpha-monooléfine linéaire contenant de 2 à 8 atomes de carbone, comme l'éthylène et le 1-butène.

Dans le cas desdits copolymères, la teneur en seconde alpha-monooléfine linéaire est généralement inférieure à 10 % en poids, de préférence inférieure à 8 % en poids, tout particulièrement inférieure à 6 % en poids, par rapport au poids de copolymère, de manière à assurer le caractère semi-cristallin de ce dernier.

Pour la réalisation de cette variante, on préfère généralement mélanger entre eux un élastomère oléfinique avec un polymère oléfinique non élastomérique dont les oléfines constitutives présentes en quantités prépondérantes sont de même nature. De plus, selon cette variante de réalisation, le mélange ainsi constitué contient généralement au moins 5 % en poids, de préférence au moins 10 % en poids et tout particulièrement au moins 15 % de polymère oléfinique non élastomérique. Généralement, le mélange ainsi constitué contient au plus 40 % en poids, de préférence au plus 30 % en poids et tout particulièrement au plus 25 % de polymère oléfinique non élastomérique.

Selon l'invention, le polymère oléfinique (B) est greffé d'au moins un composé (b) contenant au moins un groupement fonctionnel (f2).

Sous réserve que le groupement fonctionnel (f2) soit capable de réagir avec le groupement (f1) contenu dans le composé (a) et également capable de conférer des propriétés d'adhérence au polymère oléfinique (B), le groupement (f2) et le composé (b) le contenant, répondent de manière générale aux mêmes définitions et limitations que celles s'appliquant respectivement au groupement (f1) et au composé (a), mentionnés plus haut. En d'autres termes, tout ce qui a été énoncé et décrit plus haut en rapport avec :
- la nature du groupement fonctionnel (f1) ;
- la nature du composé (a) contenant ce groupe fonctionnel (f1) ;
- la nature du groupement (g) rendant possible le greffage dudit composé (a) sur le polymère fluoré (A);
- les procédés selon lesquels le composé (a) est greffé sur le polymère fluoré (A) et leurs modes de réalisation préférés ;
est applicable, mutatis mutandis, au greffage, sur le polymère oléfinique (B), du composé (b) contenant le groupement fonctionnel (f2).

Cela étant précisé, on notera que le groupement (f2), pour la fonctionnalisation par greffage du polymère oléfinique (B), est choisi parmi :
- (f2.1) les groupements dérivés d'acides carboxyliques (« groupements acides »);
- (f2.2) les groupements dérivés d'anhydrides carboxyliques, résultant de la condensation de deux groupes acides carboxyliques dans la même molécule (« groupements anhydrides »).

Quant au composé (b) contenant le groupement (f2), on préfère le choisir parmi les composés contenant au moins un groupe organique présentant au moins une liaison carbone-carbone terminale (α,β) éthyléniquement insaturée à titre de groupement rendant possible le greffage dudit composé (b) sur le polymère oléfinique (B). Des exemples de pareils composés sont les acides mono- ou dicarboxyliques insaturés et leurs dérivés et les anhydrides d'acides insaturés mono- ou dicarboxyliques, tels que l'acide acrylique, l'acide méthacrylique, l'acide maléique, l'acide fumarique, l'acide itaconique, l'acide crotonique, l'acide citraconique, l'acide bicyclo-[2.2.1]hept-2-ène-5,6 dicarboxylique, l'anhydride maléique, l'anhydride itaconique, l'anhydride crotonique et l'anhydride citraconique. L'anhydride maléique est particulièrement préféré, notamment pour des raisons d'accessibilité.

Selon une variante (V1) de l'invention, le groupement acide et/ou le groupement anhydride pouvant être présents dans le composé (b) ne sont pas neutralisés.

Selon une autre variante (V2) de l'invention, le groupement acide et/ou le groupement anhydride pouvant être présents dans le composé (b) sont neutralisés, en tout ou en partie, par au moins un agent neutralisant. Cet agent neutralisant peut être un sel inorganique, un sel organique ou encore un mélange d'un sel organique et d'un sel inorganique.

Selon (V2), le sel inorganique est de préférence un carbonate, un bicarbonate, un phosphate ou un monohydrogénophosphate d'un métal alcalin. Le carbonate de sodium est particulièrement préféré.

Selon (V2), le sel organique est de préférence un carboxylate ou un mono- ou polyhydroxycarboxylate d'un métal, lequel peut être notamment un métal alcalin, un métal alcalino-terreux, un métal de la famille IIIa du tableau prériodique des éléments ou un métal de transition. De manière particulièrement préférée, le sel organique est un carboxylate d'un métal de transition ou un mono- ou polyhydroxycarboxylate d'un métal alcalin. De manière tout particulièrement préférée, le sel organique est choisi parmi le lactate de sodium et l'acétate de zinc.

Selon (V2), l'agent neutralisant est utilisé en une quantité de préférence supérieure à 0,5 équivalent molaire par rapport au nombre de moles du groupement acide et/ou ou anhydride (f2) pouvant être présents dans le composé (b). Par ailleurs, selon (V2), l'agent neutralisant est utilisé en une quantité de préférence inférieure à 3 éq.mol. par rapport au nombre de moles du groupement acide et/ou ou anhydride (f2) pouvant être présents dans le composé (b).

Le greffage du composé (b) sur le polymère oléfinique (B) est le plus généralement effectué sur un mélange fondu du composé et du polymère. Dans le cas où le polymère oléfinique (B) est constitué d'un des mélanges (i), (ii) ou (iii) définis plus haut, et, notamment, d'un mélange d'un élastomère oléfinique avec un polymère oléfinique, non élastomérique, semi-cristallin, chacun des constituants du mélange peut être greffé séparément par un ou plusieurs composés (b), identiques ou différents. De manière préférée, le greffage du (des) composé(s) (b) peut être effectué sur ledit mélange préconstitué. On peut opérer en discontinu, dans des malaxeurs, ou en continu, dans des extrudeuses. Pour ce qui concerne les particularités opératoires de ce mode greffage, référence est faite à la description qui précède du greffage du composé (a) sur le polymère fluoré (A).

Quelle que soit la méthode de greffage retenue, la quantité de composé (b) greffé sur le polymère (B), exprimée en quantité de composé (b), est avantageusement supérieure à 0,01 % en poids rapporté au poids de polymère (B), de préférence à 0,02 % en poids ou, mieux encore, à 0,03 % en poids. En outre, cette quantité est avantageusement inférieure ou égale à 3,0 % en poids, préférentiellement à 1,5 % et mieux encore, à 1,0 % en poids.

Les compositions polymériques selon l'invention comprennent au moins un polymère (C) choisi parmi les polyesters et les polyamides.

Par polyesters, on entend désigner les polymères dont plus de 50 % en poids, de préférence plus de 90 % en poids, et de manière particulièrement préférée la totalité, des unités récurrentes sont exemptes d'atome de fluor et comprennent au moins un groupement ester (-C(=O)-O-). Par unités récurrentes, il faut entendre des unités répétitives dérivées d'un seul monomère qui a réagi selon une réaction d'ouverture de cycle et/ou d'un seul monomère qui a réagi selon une réaction d'auto-condensation et/ou de deux monomères différents qui ont réagi l'un avec l'autre selon une réaction de condensation.

Les polyesters utilisables comme polymère (C) peuvent être notamment n'importe quel polyester thermoplastique résultant de la polycondensation en phase fondue, suivie éventuellement d'une post-condensation à l'état solide, d'un acide dicarboxylique aromatique ou aliphatique ou de son ester diméthylique sur un diol aliphatique, ou encore d'un hydroxyacide aliphatique sur lui-même ou sa forme lactonique.

Des exemples d'acides dicarboxyliques ou leurs esters diméthyliques utilisables pour préparer ces polyesters sont l'acide téréphtalique, le diméthyltéréphtalate, le naphtalène dicarboxylate de méthyle et l'acide adipique. Des exemples de diols aliphatiques utilisables pour préparer ces polyesters sont l'éthylèneglycol, le propane-1,3-diol et le butane-1,4-diol. Des exemples de polyesters sont les poly(alkylènetéréphtalates), tels que les poly(éthylène- et poly(butylènetéréphtalates), le poly(éthylène naphtalate), le poly(butylène adipate) et leurs copolymères.

Les polyesters aliphatiques obtenus par polycondensation d'un hydroxyacide aliphatique conviennent également. Des exemples d'hydroxyacides aliphatiques utilisables sont les acides L- et D-lactiques (et les lactides cycliques résultant de la condensation de deux molécules de ces derniers) et l'acide glycolique.

Les polyesters aliphatiques obtenus par ouverture d'un cycle lactone conviennent également. Des exemples de monomères contenant pareil cycle lactone sont l'ε- caprolactone, la pivalolactone, l'énantholactone, la caprylolactone.

Par polyamides, on entend désigner les polymères dont plus de 50 % en poids, de préférence plus de 90 % en poids, et de manière particulièrement préférée la totalité, des unités récurrentes sont exemptes d'atome de fluor et comprennent au moins un groupement amide (-C(=O)-NH-).

Les polyamides utilisables comme polymère (C) peuvent être n'importe quelle polyamide extrudable en fondu, dont le poids moléculaire moyen en nombre est de préférence supérieur à 5000. Parmi ces polyamides, on peut citer les produits de la polycondensation de quantités équimoléculaires d'au moins un acide dicarboxylique saturé contenant 4 à 14 atomes de carbone avec une diamine primaire contenant 4 à 14 atomes de carbone. Des exemples d'acides dicarboxyliques utilisables pour préparer ces polyamides sont les acides adipique, subérique, sébacique, azélaïque, malonique, pimélique, isophtalique et téréphtalique. Des exemples de diamines primaires utilisables pour préparer ces polyamides sont la tétraméthylènediamine, la pentaméthylènediamine, l'hexa-méthylènediamine et l'octaméthylènediamine. Des exemples de polyamides sont la poly(hexaméthylène adipamide) (nylon 66), la poly(hexaméthylène azelaamide) (nylon 69), la poly(hexaméthylène sébaçamide) (nylon 610), la poly(hexaméthylène dodécanoamide) (nylon 612), la poly(dodécaméthylène dodécanoamide) (nylon 1212) et leurs copolymères. Les produits de la polycondensation de lactames et d'aminoacides sont utilisables également. Parmi ces produits, on peut citer la polycaprolactame (nylon 6), la polycaproamide et la polo(11-aminoundécano-amide).

Le polymère (C) est de préférence choisi parmi les polyesters aliphatiques et les polyamides aliphatiques.

Par polyesters aliphatiques, on entend désigner les polymères dont plus de 50 % en poids, de préférence plus de 90 % en poids, et de manière particulièrement préférée la totalité, des unités récurrentes sont aliphatiques, exemptes d'atome de fluor et comprennent au moins un groupement ester (-C(=O)-O-). Ces unités récurrentes sont habituellement le produit de la réaction de condensation d'un diacide aliphatique (et/ou de son ester diméthylique) et d'un diol aliphatique, et/ou d'auto-condensation d'un hydroxyacide aliphatique, et/ou d'ouverture de cycle d'une lactone.

Par polyamides aliphatiques, on entend désigner les polymères dont plus de 50 % en poids, de préférence plus de 90 % en poids, et de manière particulièrement préférée la totalité, des unités récurrentes sont aliphatiques, exemptes d'atome de fluor et comprennent au moins un groupement amide (-C(=O)-NH-). Ces unités récurrentes sont habituellement le produit de la réaction de condensation d'un diacide aliphatique (et/ou de son ester diméthylique) et d'une diamine aliphatique, et/ou d'auto-condensation d'un amino-acide aliphatique, et/ou d'ouverture de cycle d'une lactame.

De manière particulièrement préférée, le polymère (C) est un polyester aliphatique.

De manière tout particulièrement préférée, le polymère (C) est un polyester aliphatique dont plus de 50 % en poids, de préférence plus de 90 % en poids, et de manière particulièrement préférée la totalité, des unités récurrentes sont dérivées d'au moins une lactone.

De la manière la plus préférée, le polymère (C) est une polycaprolactone, c.-à-d. un polyester aliphatique dont plus de 50 % en poids, de préférence plus de 90 % en poids, et de manière particulièrement préférée la totalité, des unités récurrentes sont dérivées de l'ε- caprolactone.

Le polymère (C) a un poids moléculaire moyen en nombre avantageusement d'au moins 10000, de préférence d'au moins 50000, et de manière particulièrement préférée d'au moins 70000. Par ailleurs, le poids moléculaire moyen en nombre du polymère (C) est avantageusement inférieur à 100000. Le polymère (C) peut avoir un poids moléculaire moyen en poids d'au moins 10000, d'au moins 50000, ou d'au moins 70000.

Le polymère (C) peut être non greffé, ou il peut être greffé.

Selon une variante de réalisation particulière des compositions polymériques selon l'invention, le polymère (C) est greffé d'au moins un composé (c) contenant au moins un groupement fonctionnel (f3), lequel est de préférence capable de conférer des propriétés d'adhérence au dit polymère (C). Par ailleurs, le groupement fonctionnel (f3) est de préférence capable de réagir avec le groupement fonctionnel (f1) contenu dans le composé (a) et/ou avec le groupement fonctionnel (f2) contenu dans le composé (b) ; de manière particulièrement préférée, le groupement fonctionnel (f3) est capable de réagir avec le groupement fonctionnel (f1) contenu dans le composé (a).

Lorsque le groupement fonctionnel (f3) est capable de réagir avec le groupement (f2) contenu dans le composé (b), le groupement (f3) et le composé (c) le contenant, répondent de manière générale aux mêmes définitions et limitations que celles s'appliquant respectivement au groupement (f1) et au composé (a), mentionnés plus haut. En d'autres termes, tout ce qui a été énoncé et décrit plus haut en rapport avec :
- la nature du groupement fonctionnel (f1) ;
- la nature du composé (a) contenant ce groupe fonctionnel (f1) ;
- la nature du groupement (g) rendant possible le greffage dudit composé (a) sur le polymère fluoré (A) ;
- les procédés selon lesquels le composé (a) est greffé sur le polymère fluoré (A) et leurs modes de réalisation préférés ;
est applicable, mutatis mutandis, au greffage, sur le polymère (C), du composé (c) contenant le groupement fonctionnel (f3).

Lorsque le groupement fonctionnel (f3) est capable de réagir avec le groupement (f1) contenu dans le composé (a), le groupement (f3) et le composé (c) le contenant, répondent de manière générale aux mêmes définitions et limitations que celles s'appliquant respectivement au groupement (f2) et au composé (b), mentionnés plus haut. En d'autres termes, tout ce qui a été énoncé et décrit plus haut en rapport avec :
- la nature du groupement fonctionnel (f2) ;
- la nature du composé (b) contenant ce groupe fonctionnel (f2) ;
- la nature du groupement (g) rendant possible le greffage dudit composé (b) sur le polymère oléfinique (B);
- les procédés selon lesquels le composé (b) est greffé sur le polymère oléfinique (B) et leurs modes de réalisation préférés ;
est applicable, mutatis mutandis, au greffage, sur le polymère (C), du composé (c) contenant le groupement fonctionnel (f3).

Cela étant précisé, on notera que le groupement (f3), pour la fonctionnalisation par greffage du polymère (C), est de préférence choisi parmi :
- (f3.1) les groupements dérivés d'acides carboxyliques (« groupements acides »);
- (f3.2) les groupements dérivés d'anhydrides carboxyliques, résultant de la condensation de deux groupes acides carboxyliques dans la même molécule (« groupements anhydrides »).

Quant au composé (c) contenant le groupement (f3), on préfère le choisir parmi les composés contenant au moins un groupe organique présentant au moins une liaison carbone-carbone terminale (α,β) éthyléniquement insaturée à titre de groupement rendant possible le greffage dudit composé (c) sur le polymère (C). Des exemples de pareils composés sont les acides mono- ou dicarboxyliques insaturés et leurs dérivés et les anhydrides d'acides insaturés mono- ou dicarboxyliques, tels que l'acide acrylique, l'acide méthacrylique, l'acide maléique, l'acide fumarique, l'acide itaconique, l'acide crotonique, l'acide citraconique, l'acide bicyclo-[2.2.1]hept-2-ène-5,6 dicarboxylique, l'anhydride maléique, l'anhydride itaconique, l'anhydride crotonique et l'anhydride citraconique. L'anhydride maléique est particulièrement préféré, notamment pour des raisons d'accessibilité.

Le greffage du composé (c) sur le polymère (C) est le plus généralement effectué aussi sur un mélange fondu du composé et du polymère. On peut opérer en discontinu, dans des malaxeurs, ou en continu, dans des extrudeuses. Pour ce qui concerne les particularités opératoires de ce mode greffage, référence est faite à la description qui précède du greffage du composé (a) sur le polymère fluoré (A).

Quelle que soit la méthode de greffage retenue, la quantité de composé (c) greffé sur le polymère (C), exprimée en quantité de composé (c), est avantageusement supérieure à 0,01 % en poids rapporté au poids de polymère (C), de préférence à 0,02 % en poids ou, mieux encore, à 0,03 % en poids. En outre, cette quantité est avantageusement inférieure ou égale à 3,0 % en poids, préférentiellement à 1,5 % et mieux encore, à 1,0 % en poids.

Les proportions respectives dans lesquelles le polymère fluoré (A), sous sa forme greffée, et le polymère oléfinique (B), sous sa forme greffée, sont présentes dans les compositions selon l'invention, peuvent varier dans une large mesure, en fonction notamment des teneurs respectives en composé (a) et en composé (b) greffés respectivement sur ledit polymère fluoré et ledit polymère oléfinique. En général, ces proportions sont telles que le rapport en poids du polymère fluoré (A) au polymère oléfinique (B) [(A) : (B)] est compris entre 10 : 90 et 90 : 10. De préférence, le rapport pondéral [(A) : (B)] est compris entre 35 : 65 et 65 : 35. Les meilleurs résultats ont été obtenus lorsque le poids de polymère fluoré (A) excède d'au moins environ 25 % et d'au plus environ 50 % le poids de polymère oléfinique (B) dans la composition selon l'invention, c'est-à-dire lorsque le rapport pondéral [(A) : (B)] vaut de 55 : 45 environ à 60 : 40 environ.

La quantité de polymère (C) présent dans les compositions polymériques selon l'invention n'est généralement pas supérieure à celle du polymère fluoré (A) et du polymère oléfinique (B). En général, le polymère (C) est présent dans les compositions polymériques selon l'invention à raison de 5 à 35 % en poids par rapport au poids total de ces dernières, de préférence à raison de 10 à 30 % en poids, tout particulièrement à raison de 18 à 28 % en poids.

De manière tout particulièrement préférée, les compositions polymériques selon l'invention comprennent de 35 à 45 % en poids du polymère fluoré (A), de 30 à 40 % en poids de polymère oléfinique (B) et de 20 à 30 % de polymère (C).

Les compositions polymériques selon l'invention peuvent en outre comprendre un ou plusieurs additifs usuels des polymères thermoplastiques, tels que par exemple des capteurs d'acide, des agents lubrifiants, des colorants organiques ou minéraux, des agent nucléants, des matières de charge, des agents stabilisants et des agents ignifugeants.

On peut préparer les compositions polymériques selon l'invention par n'importe quelle méthode connue. Avantageusement, on choisira une méthode assurant un mélange intime de leurs constituants (A), (B) et (C). Avantageusement, on choisira une méthode permettant en outre au moins la réaction partielle du groupement fonctionnel (f1) du composé (a) avec le groupement fonctionnel (f2) du composé (b). De préférence, on choisira une méthode permettant en outre au moins la réaction partielle du groupement fonctionnel (f1) du composé (a) avec le groupement fonctionnel (f2) du composé (b) et avec l'éventuel groupement fonctionnel (f3) du composé (c).

Un autre aspect de l'invention concerne donc une méthode pour fabriquer les compositions telles que décrites ci-avant, selon laquelle on mélange en masse fondue le polymère fluoré (A), le polymère oléfinique (B) et le polymère (C). Dans la méthode selon la présente invention, il en en outre préféré de faire réagir en masse fondue le polymère fluoré (A), le polymère oléfinique (B) et le polymère (C).

Ainsi, par exemple, dans la méthode selon la présente invention, les polymères (A), (B) et (C) peuvent d'abord être pré-mélangés à sec, dans les proportions requises, dans tout dispositif convenant à cet effet, tel qu'un mélangeur à tambour. Le pré-mélange sec ainsi obtenu est alors fondu soit en discontinu, dans des dispositifs discontinus, tels que des malaxeurs, ou dans des dispositifs continus, tels que les extrudeuses décrites plus haut en rapport avec le greffage du composé (a) sur le polymère fluoré (A). On peut aussi réaliser le pré-mélange destiné à être fondu par la technique du masterbatch. On peut encore alimenter les malaxeurs ou les extrudeuses par les polymères (A), (B) et (C) dosés séparément sans pré-mélange à sec. Il peut s'avérer avantageux, en particulier lorsque le constituant (B) est un élastomère oléfinique, d'ajouter aux polymères (A), (B) et (C) quelques pour-cent en poids, généralement entre 1 et 20 %, de préférence entre 2 et 10 % en poids, d'un « processing-aid » qui peut par exemple être un polyéthylène à basse densité. De plus, l'utilisation d'une polycaprolactone greffée d'un composé (c) contenant un groupe fonctionnel (f3.2), notamment l'anhydride maléique, à titre de polymère (C) peut également faciliter la fabrication des compositions polymériques selon l'invention. Une fois les polymères (A), (B) et (C) fondus, on effectue ou on poursuit le mélange de ces constituants dans tout dispositif convenant à cet effet. Avantageusement, on utilise pour ce faire les même dispositifs discontinus (malaxeurs, par exemple) ou continus (extrudeuses, par exemple) que ceux préalablement utilisés pour l'opération de fusion. Enfin, tout en poursuivant le mélange en fondu des constituants (A), (B) et (C) ou après avoir terminé celui-ci, on fait de préférence réagir les constituants (A), (B) et (C) en masse fondue dans ces mêmes dispositifs.

L'homme du métier peut aisément déterminer les conditions générales de fonctionnement des dispositifs de mélange, fusion et réaction moyennant quelques essais de routine préalables. Dans le cas des extrudeuses, en particulier, les températures des zones de fusion, d'homogénéisation et de réaction sont généralement réglées entre 140 et 270°C, de préférence entre 170 et 240°C; la pression dans la filière est généralement inférieure à 200 bars, de préférence à 100 bars, et de manière plus préférée encore à 50 bars;la vitesse de rotation de la ou des vis est généralement comprise entre 50 et 2000 tours par minute, de préférence entre 200 et 1000 tours par minutes. On a constaté par ailleurs que l'utilisation, à titre de polymère (B), d'un mélange d'un élastomère oléfinique avec un polymère oléfinique, non élastomérique, semi-cristallin, conduisait, dans ce cas, à des granules bien formés de dimension uniforme.

Les propriétés adhésives des compositions selon l'invention peuvent être mises à profit pour la réalisation de structures multicouches, qui constituent un autre objet de la présente invention. Il s'agit de structures multicouches dont une des couches est constituée de la composition polymérique à propriétés adhésives. Ces structures contiennent au moins une autre couche qui peut être constituée de divers matériaux, tant inorganiques qu'organiques. A titre de matériaux inorganiques pouvant entrer dans la composition de cette autre couche, on peut citer les métaux et alliages métalliques, tels que l'aluminium et l'acier par exemple. A titre de matériaux organiques pouvant entrer dans la composition de cette autre couche, on peut citer les polymères thermoplastiques. Des exemples de polymères thermoplastiques pouvant entrer dans la composition de cette autre couche sont les polymères contenant du fluor appartenant à la famille des polymères fluorés (A) et les polymères contenant des oléfines de la même nature que celle(s) présente(s) dans le polymère oléfinique (B).

Des structures multicouches particulières selon cet aspect de la présente invention sont des structures tricouches à configuration X/Y/Z dont la couche centrale Y est constituée de la composition polymérique à propriétés adhésives selon l'invention et dont les couches X et Z sont constituées d'un polymère thermoplastique, tel que défini ci-dessus. Des structures multicouches préférées sont des structures tricouches à configuration X/Y/Z dont la couche centrale Y est constituée de la composition polymérique à propriétés adhésives selon l'invention, la couche X est constituée d'un polymère à base d'oléfine(s) de la même nature que celle(s) présente(s) dans le polymère oléfinique (B) et la couche Z est constituée d'un polymère répondant à la définition des polymères fluorés (A).

Ces structures multicouches peuvent être produites selon n'importe quel procédé, connu à cet effet et compatible avec la nature du matériau constitutif de chaque couche. L'assemblage des couches peut se faire par exemple par collage ou par pressage à chaud des couches constitutives entre elles, par enduction d'une couche solide au moyen d'une poudre ou d'une solution du matériau constitutif de la ou des autre(s) couche(s); ou encore, en particulier dans le cas où les matériaux constitutifs des couches sont des polymères thermoplastiques, par coextrusion, par coextrusion-soufflage, par coinjection et par coinjection-moulage.

La coextrusion est particulièrement indiquée pour la production de structures tricouches à configuration X/Y/Z dont la couche centrale Y est constituée de la composition polymérique à propriétés adhésives selon l'invention, la couche X est constituée d'un polymère à base d'oléfine(s) de la même nature que celle(s) présente(s) dans le polymère oléfinique (B), en particulier un homo- ou copolymère dérivé de l'éthylène et/ou du propylène et la couche Z est constituée d'un polymère répondant à la définition des polymères fluorés (A), en particulier un homo- ou copolymère dérivé du fluorure de vinylidène. Cette coextrusion peut être réalisée par exemple dans trois extrudeuses, de préférence trois extrudeuses à une vis, alimentant une filière plate via un feed-block ou, de préférence, alimentant des filières tubulaires à trois couches.

Les structures tricouches à configuration X/Y/Z ainsi produites peuvent être fabriquées sous la forme finale de feuilles et de films.

Les structures tricouches à configuration X/Y/Z ainsi produites peuvent également être fabriquées sous la forme finale de corps creux, en particulier de réservoirs, de bouteilles, de récipients, de tubes et de tuyaux. La couche X constitue alors de préférence la couche extérieure (convexe) des corps creux, tandis que la couche Z constitue alors la couche intérieure (concave) des corps creux. Les corps creux, en particulier les tubes, canalisations et réservoirs, sont avantageusement utilisés pour le transport et/ou le stockage d'hydrocarbures liquides, en particulier d'huiles et de carburants.

Les exemples qui suivent sont destinés à illustrer l'invention sans pour autant en limiter la portée.

### Exemple 1

Dans un malaxeur de type Brabender Plasticorder PL 2000 tournant à 50 tours/minute, on a préparé une composition polymérique en mélangeant entre eux, à une température de 200°C :
(A) un copolymère statistique contenant 85 % en poids de fluorure de vinylidène et 15 % en poids d'hexafluoropropylène, dont l'indice de fluidité MFL_{2.16kg, 230°C} (norme ASTM 1238, filière 8/2) est de 8 g/10min et qui a été greffé de molécules de 3-allyloxy-1,2-propanediol (ce copolymère greffé a été obtenu en mettant en oeuvre, dans une extrudeuse Clextral modèle BC 21 à double vis corotatives dont la zone d'alimentation a été chauffée à 170°C et la filière d'extrusion à 220°C, par kg de copolymère extrudé, 12 g de 3-allyloxy-1,2-propanediol et 4 g de 2,5-diméthyl 2,5-di (tert-butylperoxy) hexane (DHBP) à titre de générateur de radicaux) ;
(B) un élastomère oléfinique contenant 80 % en poids de propylène et 20 % en poids d'éthylène, dont l'indice de fluidité MF_{2.16kg, 230°C} (norme ASTM 1238, filière 8/2) est de 2,3 g/10min, dont la viscosité Mooney (norme ASTM D 1646) est de 25 (produit commercialisé par Exxon Mobil Chemical sous la dénomination Vistamaxx^{®} VM 1100) qui a été greffé, de manière conventionnelle en extrudeuse, d'anhydride maléique en présence de DHBP à titre de générateur de radicaux ;
(C) une polycaprolactone de poids moléculaire moyen en nombre de 80000 et dont l'indice de fluidité MFL_{2.16kg, 160°C} (ASTM 1238, filière 8/2) est de 3 g/10min (produit commercialisé sous la dénomination Capa^{®} 6800 par Solvay).

Le constituant (A) représente 45 % en poids de la composition polymérique, le constituant (B) 30 % en poids et le constituant (C) 25 % en poids.

Dans une presse hydraulique Werner & Pfleiderer, dont le moule est constitué de plaques en acier de 180 mm x 180 mm x 2 mm revêtues d'un film anti-adhésif en Teflon^{®}, on réalise une structure tricouche dont la couche centrale est constituée de la composition polymérique préparée comme indiqué ci-dessus, la couche supérieure est constituée d'un copolymère statistique de propylène et d'éthylène commercialisé sous la dénomination ELTEX^{®} P KS 409 par la société INEOS (indice de fluidité MFI_{2.16kg, 230°C} (norme ASTM 1238, filière 8/2) : 5 g/10min) est constituée d'un polymère d'oléfine et la couche inférieure est constituée du polymère fluoré mentionné sous (A) ci-dessus, mais non greffé.

Pour la réalisation de la structure tricouche, on maintient la presse pendant 10 minutes à pression atmosphérique puis pendant 2 minutes à 50 bars ; ensuite on maintient la presse pendant 5 minutes à température ambiante à 20 bars.

Un test manuel de pelage montre qu'il est impossible de désolidariser les couches constitutives de la structure tricouche obtenue, même en tirant au plus fort.

### Exemple 2R

Cet exemple est fourni à titre de comparaison.

On reproduit l'exemple 1, sauf que l'on n'utilise pas la polycaprolactone (C) pour la préparation de la composition polymérique. Au test de pelage, la couche inférieure constituée du polymère fluoré se décolle facilement de la structure tricouche.

### Exemple 3R

Cet exemple est fourni à titre de comparaison.

On reproduit l'exemple 1, sauf que les constituants (A) et (B) de la composition polymérique ne sont pas greffés. Au test de pelage, la couche inférieure constituée du polymère fluoré se décolle facilement de la structure tricouche.

### Exemple 4R

Cet exemple est fourni à titre de comparaison.

On reproduit l'exemple 1, sauf que le constituant (B) de la composition polymérique n'est pas greffé. Au test de pelage, la couche inférieure constituée du polymère fluoré se décolle facilement de la structure tricouche.

### Exemple 5

On prépare une composition polymérique comme à l'exemple 1, sauf que l'on remplace l'élastomère oléfinique (B) qui y est décrit par un copolymère élastomérique d'éthylène et d'octène dont l'indice de fluidité MFI_{2.16kg, 190°C} (norme ASTM 1238, filière 8/2) est de 6,3 g/10min et dont la viscosité Mooney (norme ASTM D 1646) est de 8 (produit commercialisé par Exxon Mobil Chemical sous la dénomination Exact^{®} 5371) greffé, de manière conventionnelle en extrudeuse, d'anhydride maléique en présence de DHBP à titre de générateur de radicaux.

On réalise ensuite une structure tricouche comme à l'exemple 1, sauf que la couche supérieure est constituée d'un homopolymère à haute densité de l'éthylène dont la densité est 0,944 et l'indice de fluidité MFI_{2.16kg, 190°C} (norme ASTM 1238, filière 8/2) est de 3,5 g/10min (produit commercialisé sous la dénomination ELTEX^{®} A 4040 par la société Ineos).

Un test manuel de pelage montre qu'il est impossible de désolidariser les couches constitutives de la structure tricouche obtenue.

### Exemple 6

On prépare une composition polymérique comme à l'exemple 1, sauf que l'on modifie la polycaprolactone (C) qui y est décrite en la greffant, de manière conventionnelle en extrudeuse, d'anhydride maléique en présence de DHBP à titre de générateur de radicaux. La polycaprolactone ainsi greffée présente un indice de fluidité MFI_{2.16kg, 190°C} (norme ASTM 1238, filière 8/2) de 11 g/10min et une teneur en anhydride maléique greffé de 3,6 g/kg.

Pour tester la capacité d'adhésion de cette composition, on fabrique, dans un rhéomètre capillaire, un jonc (j1) à base du polymère fluoré mentionné sous (A) à l'exemple 1 (non greffé), un jonc (j3) du copolymère statistique de propylène et d'éthylène mentionné au même exemple et un jonc (j2) de la composition polymérique définie ci-dessus. Les joncs, nettoyés à l'acétone, sont ensuite juxtaposés deux par deux ((j1) avec (j3) puis (j2) avec (j3)), de manière à assurer le contact entre eux, sur une plaque en aluminium sur laquelle sont creusés des sillons adjacents revêtus d'un film anti-adhésif en Teflon^{®}. La plaque en aluminium est ensuite placée en étuve pendant 10 minutes à 200 °C puis refroidie à température ambiante. Un test manuel de pelage montre qu'il est impossible de désolidariser les joncs (j1) et (j3) et difficile de séparer le jonc (j2) du jonc (j3).

### Exemple 7

On prépare une composition polymérique comme à l'exemple 1, sauf que l'on remplace l'élastomère oléfinique (B) qui y est décrit par un mélange contenant 50 % en poids de ce dernier et 50 % en poids d'un copolymère contenant 96 % en poids de propylène et 4 % en poids d'éthylène dont l'indice de fluidité MFI_{1.2kg, 190°C} (norme ASTM 1238, filière 8/1) est de 5 g/10min et qui est greffé de 5 g / kg d'anhydride maléique (produit commercialisé par Solvay sous la dénomination Priex^{®} 25095).

On réalise ensuite une structure tricouche comme à l'exemple 1. Un test manuel de pelage effectué sur cette structure montre qu'il est très difficile d'en désolidariser les couches constitutives.

### Exemple 8

On a préparé un constituant (A) comme à l'exemple 1, sauf que le copolymère statistique contenant 85 % en poids de fluorure de vinylidène et 15 % en poids d'hexafluoropropylène a été greffé d'allylglycidyléther au lieu de 3-allyloxy-1,2-propanediol (ce copolymère greffé a été obtenu en mettant en oeuvre, dans une extrudeuse Clextral modèle BC 21 à double vis corotatives dont la zone d'alimentation a été chauffée à 170°C et la filière d'extrusion à 220°C, par kg de copolymère extrudé, 15 g d'allylglycidyléther et 4 g de 2,5-diméthyl 2,5-di (tert-butylperoxy) hexane (DHBP) à titre de générateur de radicaux).

On a comparé la stabilité thermique des constituants (A) de l'exemple 1 (PVDF greffé 3-allyloxy-1,2-propanediol (AOPD)), de l'exemple 3R (PVDF non greffé) et du présent exemple 8 (PVDF greffé allylglycidyléther (AGE)) par analyse thermogravimétrique.

On a obtenu les résultats suivants :

| | Température à laquelle on obtient une perte de poids de x % (°C) | | | | |
|---|---|---|---|---|---|
| Echantillon | x= 1 % | X=2 % | x=3 % | x=5 % | x=10 % |
| Polymère (A) de l'exemple 3R - PVDF non greffé | 365°C | 378°C | 386°C | 397°C | 414°C |
| Polymère (A) de l'exemple 8 - PVDF greffé AGE | 369°C | 387°C | 394°C | 403°C | 418°C |
| Polymère (A) de l'exemple 1 - PVDF greffé AOPD | 386°C | 396°C | 403°C | 414°C | 435°C |

On a observé que le polymère (A) de l'exemple 1 (PVDF greffé AOPD) avait une stabilité thermique bien supérieure à celle du polymère (A) de l'exemple 8 (PVDF greffé AGE), elle-même supérieure à celle du polymère (A) de l'exemple 3R (PVDF non greffé).

Cette excellente stabilité thermique du PVDF greffé AOPD est un des avantages qui rend particulièrement attractif l'utilisation de ce polymère dans les compositions polymériques adhésives selon la présente invention.

## Revendications

1. Compositions polymériques à propriétés adhésives comprenant :
(1) au moins un polymère fluoré (A) greffé d'au moins un composé (a), lequel composé (a) contient au moins un groupement fonctionnel (f1) capable de conférer des propriétés d'adhérence au dit polymère fluoré, ledit groupement fonctionnel (f1) étant choisi parmi :
(f1.5) les groupements époxy;
(f1.6) les groupements hydroxylés dérivés d'alcools;
(f1.7) les groupements carbonyles ;
(2) au moins un polymère oléfinique (B) greffé d'au moins un composé (b), lequel composé (b) contient au moins un groupement fonctionnel (f2) capable de conférer des propriétés d'adhérence au dit polymère oléfinique et de réagir avec le groupement fonctionnel (f1) contenu dans le composé (a),ledit groupement fonctionnel (f1) étant choisi parmi :
(f2.1) les groupements dérivés d'acides carboxyliques;
(f2.2) les groupements dérivés d'anhydrides carboxyliques, résultant de la condensation de deux groupes acides carboxyliques dans la même molécule;
(3) au moins un polymère (C) choisi parmi les polyesters et les polyamides.

2. Compositions selon la revendication 1 **caractérisées en ce que** le polymère fluoré (A) est un polymère du fluorure de vinylidène.

3. Compositions selon la revendication 1 ou 2, **caractérisées en ce que** le composé (a) contient au moins un groupe organique présentant au moins une liaison carbone-carbone terminale (α,β) éthyléniquement insaturée et au moins un groupement fonctionnel (f1) choisi parmi les groupements époxy et les groupements hydroxylés dérivés d'alcools.

4. Compositions selon la revendication 3, **caractérisées en ce que** le composé (a) est le 3-allyloxy-1,2-propanediol.

5. Compositions selon l'une quelconque des revendications 1 à 4, **caractérisées en ce que** le composé (b) contient au moins un groupe organique présentant au moins une liaison carbone-carbone terminale (α,β) éthyléniquement insaturée et au moins un groupement fonctionnel (f2) choisi parmi les groupements dérivés d'acides carboxyliques et les groupements dérivés d'anhydrides carboxyliques.

6. Compositions selon l'une quelconque des revendications 1 à 5, **caractérisées en ce que** le polymère (C) est une polycaprolactone.

7. Compositions selon l'une quelconque des revendications 1 à 6, **caractérisées en ce que** le rapport en poids du polymère fluoré (A) au polymère oléfinique (B) est compris entre 65 : 35 et 35 : 65.

8. Compositions selon l'une quelconque des revendications 1 à 7, **caractérisées en ce que** le polymère (C) est présent à raison de 5 à 35 % en poids par rapport au poids total des compositions.

9. Méthode pour fabriquer les compositions selon l'une quelconque des revendications 1 à 8, selon laquelle on mélange en masse fondue le polymère fluoré (A), le polymère oléfinique (B) et le polymère (C).

10. Structures multicouches comprenant une couche constituée d'une composition polymérique selon l'une quelconque des revendications 1 à 8, et au moins une autre couche.

11. Utilisation des structures multicouches selon la revendication 10 pour le transport et/ou le stockage d'hydrocarbures liquides.

## Patentansprüche

1. Polymerzusammensetzungen mit Hafteigenschaften, umfassend :
(1) mindestens ein Fluorpolymer (A), das mit mindestens einer Verbindung (a) gepfropft ist, wobei die Verbindung (a) mindestens eine funktionelle Gruppe (f1) enthält, die in der Lage ist, dem Fluorpolymer Hafteigenschaften zu verleihen, wobei die funktionelle Gruppe (f1) ausgewählt ist aus :
(f1.5) Epoxygruppen;
(f1.6) von Alkoholen abgeleiteten hydroxylierten Gruppen;
(f1.7) Carbonylgruppen;
(2) mindestens ein Olefinpolymer (B), das mit mindestens einer Verbindung (b) gepfropft ist, wobei die Verbindung (b) mindestens eine funktionelle Gruppe (f2) enthält, die in der Lage ist, dem Olefinpolymer Hafteigenschaften zu verleihen und mit der funktionellen Gruppe (f1), die in der Verbindung (a) enthalten ist, zu reagieren, wobei die funktionelle Gruppe (f2) ausgewählt ist aus :
(f2.1) von Carbonsäuren abgeleiteten Gruppen;
(f2.2) von Carbonsäureanhydriden abgeleiteten Gruppen, die aus der Kondensation von zwei Carbonsäuregruppen in dem gleichen Molekül resultieren;
(3) mindestens ein Polymer (C), ausgewählt aus den Polyestern und den Polyamiden.

2. Zusammensetzungen nach Anspruch 1, **dadurch gekennzeichnet, dass** das Fluorpolymer (A) ein Vinylidenfluoridpolymer ist.

3. Zusammensetzungen nach Anspruch 1 oder 2, **dadurch gekennzeichnet, dass** die Verbindung (a) mindestens eine organische Gruppe enthält, die mindestens eine α,β-ethylenisch ungesättigte, terminale Kohlenstoff-Kohlenstoff-Bindung und mindestens eine funktionelle Gruppe (f1), ausgewählt aus den Epoxygruppen und den von Alkoholen abgeleiteten hydroxylierten Gruppen, aufweist.

4. Zusammensetzungen nach Anspruch 3, **dadurch gekennzeichnet, dass** die Verbindung (a) 3-Allyloxy-1,2-propandiol ist.

5. Zusammensetzungen nach einem der Ansprüche 1 bis 4, **dadurch gekennzeichnet, dass** die Verbindung (b) mindestens eine organische Gruppe enthält, die mindestens eine α,β-ethylenisch ungesättigte, terminale Kohlenstoff-Kohlenstoff-Bindung und mindestens eine funktionelle Gruppe (f2), ausgewählt aus den von Carbonsäuren abgeleiteten Gruppen und den von Carbonsäureanhydriden abgeleiteten Gruppen, aufweist.

6. Zusammensetzungen nach einem der Ansprüche 1 bis 5, **dadurch gekennzeichnet, dass** das Polymer (C) ein Polycaprolacton ist.

7. Zusammensetzungen nach einem der Ansprüche 1 bis 6, **dadurch gekennzeichnet, dass** das Gewichtsverhältnis des Fluorpolymers (A) zum Olefinpolymer (B) im Bereich zwischen 65:35 und 35:65 liegt.

8. Zusammensetzungen nach einem der Ansprüche 1 bis 7, **dadurch gekennzeichnet, dass** das Polymer (C) in einer Menge von 5 bis 35 Gew.- %, bezogen auf das Gesamtgewicht der Zusammensetzungen, vorhanden ist.

9. Verfahren zur Herstellung der Zusammensetzungen nach einem der Ansprüche 1 bis 8, wobei das Fluorpolymer (A), das Olefinpolymer (B) und das Polymer (C) in der Schmelze gemischt werden.

10. Mehrschichtige Strukturen, die eine Schicht, die aus einer Polymerzusammensetzung nach einem der Ansprüche 1 bis 8 besteht, und mindestens eine andere Schicht umfassen.

11. Verwendung der mehrschichtigen Strukturen nach Anspruch 10 zum Transport und/oder zur Lagerung von flüssigen Kohlenwasserstoffen.

## Claims

1. Polymer compositions with adhesive properties comprising :
(1) at least one fluoropolymer (A) grafted by at least one compound (a), which compound (a) contains at least one functional group (f1) capable of conferring adhesion properties on said fluoropolymer, said functional group being selected among :
(f1.5) epoxy groups ;
(f1.6) hydroxylated groups derived from alcohols;
(f1.7) carbonyl groups ;
(2) at least one olefin polymer (B) grafted by at least one compound (b), which compound (b) contains at least one functional group (f2) capable of conferring adhesion properties on said olefin polymer and of reacting with the functional group (f1) contained in compound (a), said functional group (f2) being selected among :
(f2.1) groups derived from carboxylic acids;
(f2.2) groups derived from carboxylic anhydrides, resulting from the condensation of two carboxylic acid groups in the same molecule;
(3) at least one polymer (C) chosen from polyesters and polyamides.

2. Compositions according to Claim 1, **characterized in that** the fluoropolymer (A) is a vinylidene fluoride polymer.

3. Compositions according to Claim 1 or 2, **characterized in that** the compound (a) contains at least one organic group having at least one terminal (α,β) ethylenically unsaturated carbon-carbon bond and at least one functional group (f1) chosen from epoxy groups and hydroxylated groups derived from alcohols.

4. Compositions according to Claim 3, **characterized in that** the compound (a) is 3-allyloxy-1,2-propanediol.

5. Compositions according to any one of Claims 1 to 4, **characterized in that** the compound (b) contains at least one organic group having at least one terminal (α,β) ethylenically unsaturated carbon-carbon bond and at least one functional group (f2) chosen from groups derived from carbpxylic acids and groups derived from carboxylic anhydrides.

6. Compositions according to anyone of Claims 1 to 5, **characterized in that** the polymer (C) is a polycaprolactone.

7. Compositions according to anyone of Claims 1 to 6, wherein the weight ratio of said fluoropolymer (A) to the olefin polymer (B) is between 65/35 and 35/65.

8. Compositions according to anyone of Claims 1 to 7, wherein said polymer (C) is present in an amount of 5 to 35 % by weight relative to the total weight of the compositions.

9. Method for manufacturing the compositions according to any one of Claims 1 to 8, according to which the fluoropolymer (A), the olefin polymer (B) and the polymer (C) are mixed as a molten mass.

10. Multilayer structures comprising a layer composed of a polymer composition according to any one of Claims 1 to 8, and at least one other layer.

11. Use of the multilayer structures according to Claim 10 for the transport and/or storage of liquid hydrocarbons.
